# EUROPEAN PATENT SPECIFICATION

(11) **EP 4 012 222 B1**
(45) Date of publication and mention of the grant of the patent: **10.01.2024**
(21) Application number: 21169362.7
(22) Date of filing: 20.04.2021
(51) Int. Cl.: F16H 1/32

(54) **CYCLOIDAL SPEED REDUCER WITH PRELOAD ADJUSTMENT DEVICE**
ZYKLOIDENDREHZAHLMINDERER MIT VORSPANNUNGANPASSUNGSVORRICHTUNG
RÉDUCTEUR DE VITESSE CYCLOÏDAL DOTÉ D'UN DISPOSITIF DE RÉGLAGE DE PRÉCHARGE

(30) Priority: 11.12.2020 TW 109143909
(43) Date of publication of application: 15.06.2022
(73) Proprietor: Hiwin Technologies Corp., Taichung City 40852 (TW)
(72) Inventor: CHENG, Hsu-Min, 40852 Taichung City (TW); PENG, Tsung-Wen, 40852 Taichung City (TW); LI, Wen-Chia, 40852 Taichung City (TW)
(74) Representative: Straus, Alexander

(56) References cited:
- EP-A1- 0 474 897
- EP-A1- 0 488 161
- US-A1- 2019 047 610
- US-A1- 2019 113 105
- US-A1- 2020 339 093

## Description

### Field of the Invention

The present invention relates to a cycloidal speed reducer and more particularly to a cycloidal speed reducer with a preload adjustment device.

### Background of the Invention

The working principle of a cycloidal speed reducer consists in inputting a driving force through an eccentric shaft and transmitting the driving force through a tooth difference-based mechanism to reduce the speed of the output. The bearing of the eccentric shaft is generally preloaded to eliminate any undesirable gap and increase the rigidity of the shaft-bearing assembly, the objective being to provide the eccentric shaft with consistent transmission accuracy.

JP 2017141915 A and JP 5009232 B2 disclose placing at least one washer in a gap beside a bearing and adjusting the number or size of the at least one washer according to the size of the gap so as to adjust the preload on the bearing. However, using a washer to carry out preload adjustment not only adds to the difficulty of assembly, but also causes an increase in volume in the axial direction.

US 2020339093 A1 discloses a brake device including a wheel brake unit; an electric motor; a speed reducer for decelerating rotation of the electric motor; a rotation-linear motion converter for converting a rotational output of the speed reducer into a linear motion; and a braking force transmission member. The speed reducer includes a rotation output section, the rotary block and the rotation output section of which may be coupled to each other via an Oldham coupling.

This document discloses the following features of the appended independent claim 1: a cycloidal speed reducer, comprising a housing; a rotating shaft extending through the housing in a rotatable manner, wherein the rotating shaft has an input end and an output end, the input end has a first shoulder portion, and the output end has a second shoulder portion; an input flange provided at one end of the housing and mounted around the input end of the rotating shaft; a first bearing having a first inner ring and a first outer ring, wherein the first inner ring is mounted around the input end of the rotating shaft and lies against the first shoulder portion of the rotating shaft, and the first outer ring has an outer peripheral surface abutted against the input flange; an output flange provided at an opposite end of the housing and mounted at the output end of the rotating shaft; a second bearing having a second inner ring and a second outer ring, wherein the second inner ring is mounted around the output end of the rotating shaft and lies against the second shoulder portion of the rotating shaft, and the second outer ring has an outer peripheral surface abutted against the output flange; a speed reducing device having at least one cycloidal disc, and at least one Oldham's coupling, wherein the cycloidal disc is mounted eccentrically around and connected to the rotating shaft.

### Summary of the Invention

The primary objective of the present invention is to provide a cycloidal speed reducer that is easy to assemble, that allows the preload applied to the bearing(s) in the cycloidal speed reducer to be adjusted with ease, and that will not undergo any axial increase in volume.

To achieve the primary objective stated above, the present invention provides a cycloidal speed reducer that includes a housing, a rotating shaft, an input flange, a first bearing, an output flange, a second bearing, a speed reducing device, and a preload adjustment device. The rotating shaft extends through the housing in a rotatable manner and has an input end and an output end. The input end has a first shoulder portion, and the output end has a second shoulder portion. The input flange is provided at one end of the housing and is mounted around the input end of the rotating shaft. The first bearing has a first inner ring and a first outer ring. The first inner ring is mounted around the input end of the rotating shaft and lies against the first shoulder portion of the rotating shaft. The first outer ring has an outer peripheral surface abutting against the input flange. The output flange is provided at the opposite end of the housing and is mounted at the output end of the rotating shaft. The output flange has an adjusting screw hole. The second bearing has a second inner ring and a second outer ring. The second inner ring is mounted around the output end of the rotating shaft and lies against the second shoulder portion of the rotating shaft. The second outer ring has an outer peripheral surface abutting against the output flange. The speed reducing device has at least one cycloidal disc and at least one Oldham's coupling. The cycloidal disc is mounted eccentrically around and connected to the rotating shaft. The Oldham's coupling is provided between the cycloidal disc and the input flange or the output flange. The preload adjustment device has a preloading plate and an adjusting screw. The preloading plate is adjacent to the output end of the rotating shaft and abuts against the second outer ring of the second bearing. The adjusting screw is threadedly engaged in the adjusting screw hole of the output flange and has one end pressing against the preloading plate. By rotating the adjusting screw, the preloading plate is pushed against the second outer ring of the second bearing by the adjusting screw and thus apply a preload to the second bearing.

It can be known from the above that the cycloidal speed reducer of the present invention allows the preload on the second bearing to be rapidly and easily adjusted, features relatively great ease of manufacture and assembly, and will not have any axial increase in volume in the entire structure.

Preferably, the preload adjustment device further has an anti-rotation nut. The anti-rotation nut is threadedly engaged with the adjusting screw and abuts against the outer side of the output flange to prevent the adjusting screw from getting loose by rotating in reverse.

Preferably, the inner side of the output flange has a receiving cavity for receiving the output end of the rotating shaft, the second bearing, and the preloading plate. The outer periphery of the preloading plate is provided with a sealing element abutting against the wall of the receiving cavity to prevent the lubricating oil in the cycloidal speed reducer from leaking out.

Preferably, the side of the preloading plate that faces the rotating shaft has an annular ridge, and the preloading plate is pressed against the second outer ring of the second bearing via the annular ridge.

Preferably, the output flange further has a countersunk screw hole, the side of the preloading plate that faces the output flange has a slot, and the preload adjustment device further has an anti-rotation screw. The anti-rotation screw is threadedly engaged in the countersunk screw hole and has one end extending into the slot to prevent the preloading plate from spinning.

Alternatively, it is preferable that the output flange further has a countersunk hole, that the side of the preloading plate that faces the output flange has an anti-rotation screw hole, that the preload adjustment device further has an anti-rotation screw, and that the anti-rotation screw extends through the countersunk hole and has one end threadedly engaged in the anti-rotation screw hole to prevent the preloading plate from spinning.

As another alternative, it is preferable that the inner side of the output flange further has an anti-rotation groove, that the side of the preloading plate that faces the output flange has an anti-rotation protruding block, and that the anti-rotation groove of the output flange and the anti-rotation protruding block of the preloading plate are engaged with each other to prevent the preloading plate from spinning.

Preferably, the pressing end of the adjusting screw may be conical or flat.

Preferably, the adjusting screw hole is located at the center of the output flange to enable uniform application of force over the entire preloading plate.

The structural details, features, and assembly or use method of the cycloidal speed reducer with a preload adjustment device provided by the present invention which is defined by the appended claims will be described below with reference to some illustrative embodiments. As would be understood by a person of ordinary skill in the art, the following detailed description and the specific embodiments disclosed herein serve only to expound the invention but not to limit the scope of the invention.

### Brief Description of the Drawings

FIG. 1 is a perspective view of the cycloidal speed reducer according to the first embodiment of the present invention;
FIG. 2 is a partially exploded perspective view of the cycloidal speed reducer in FIG. 1;
FIG. 3 is another perspective view of the cycloidal speed reducer according to the first embodiment of the present invention;
FIG. 4 is another partially exploded perspective view of the cycloidal speed reducer in FIG. 1 and is viewed from the viewing angle of FIG. 3;
FIG. 5 is an assembled sectional view of the cycloidal speed reducer according to the first embodiment of the present invention;
FIG. 6 is an assembled sectional view of the cycloidal speed reducer in FIG. 1 mounted with an additional sealing element;
FIG. 7 is a perspective view of the cycloidal speed reducer according to the second embodiment of the invention;
FIG. 8 is a partially exploded perspective view of the cycloidal speed reducer in FIG. 7;
FIG. 9 is an assembled sectional view of the cycloidal speed reducer according to the second embodiment of the invention;
FIG. 10 is a partially exploded perspective view of the cycloidal speed reducer according to the third embodiment of the invention;
FIG. 11 is an assembled sectional view of the cycloidal speed reducer according to the third embodiment of the invention;
FIG. 12 is a partially exploded perspective view of the cycloidal speed reducer according to the fourth embodiment of the invention; and
FIG. 13 is an assembled sectional view of the cycloidal speed reducer according to the fourth embodiment of the invention.

### Detailed Description of the Invention

To begin with, the applicant wishes to point out that, throughout this specification (including the following description of some illustrative embodiments of the present invention) and the appended claims, all the directional terms make reference to the directions presented in the accompanying drawings. Moreover, in the following embodiments and the drawings, the same or similar elements or structural features are indicated by the same reference numeral.

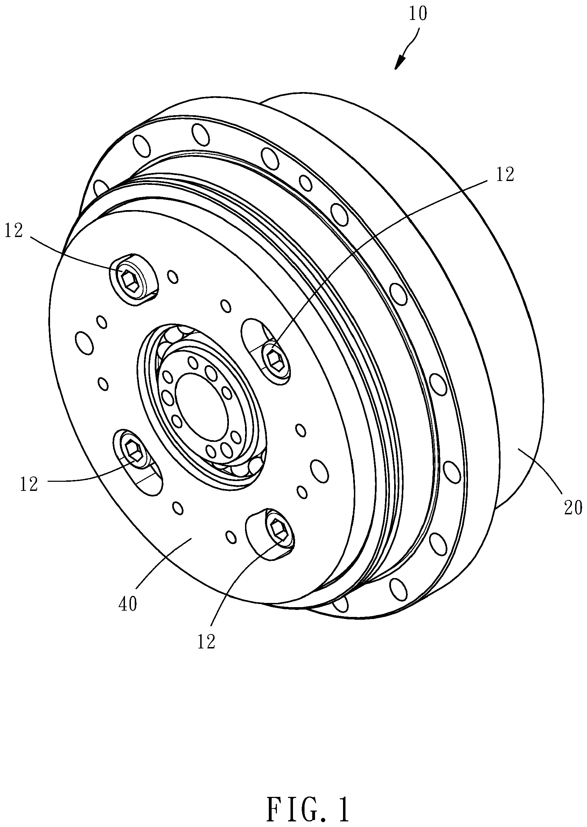

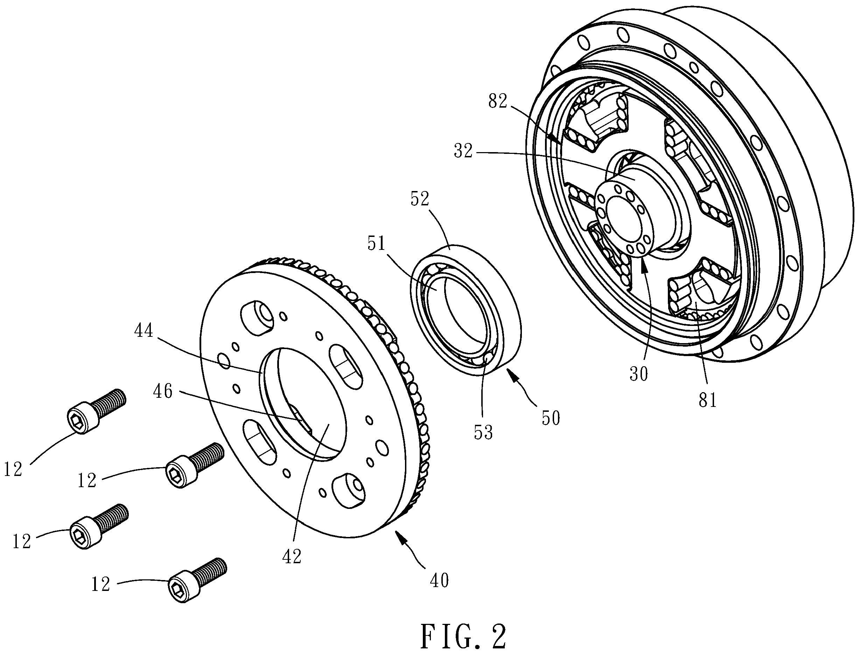

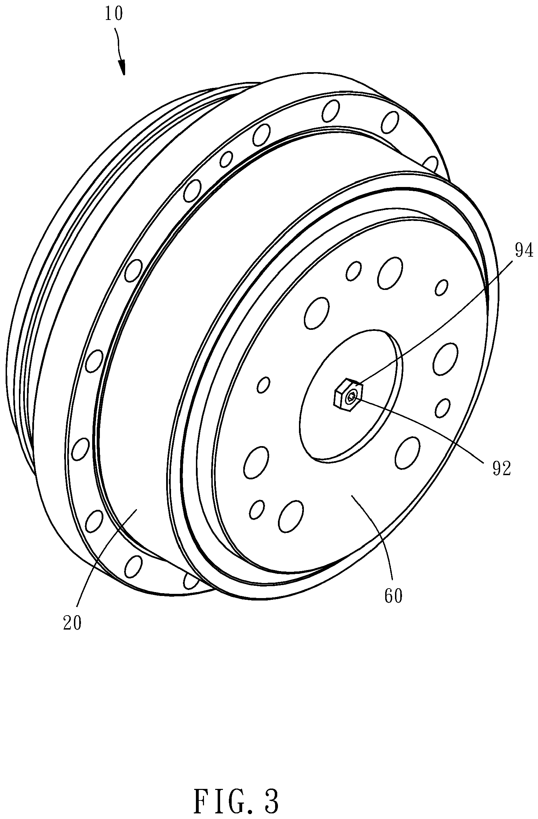

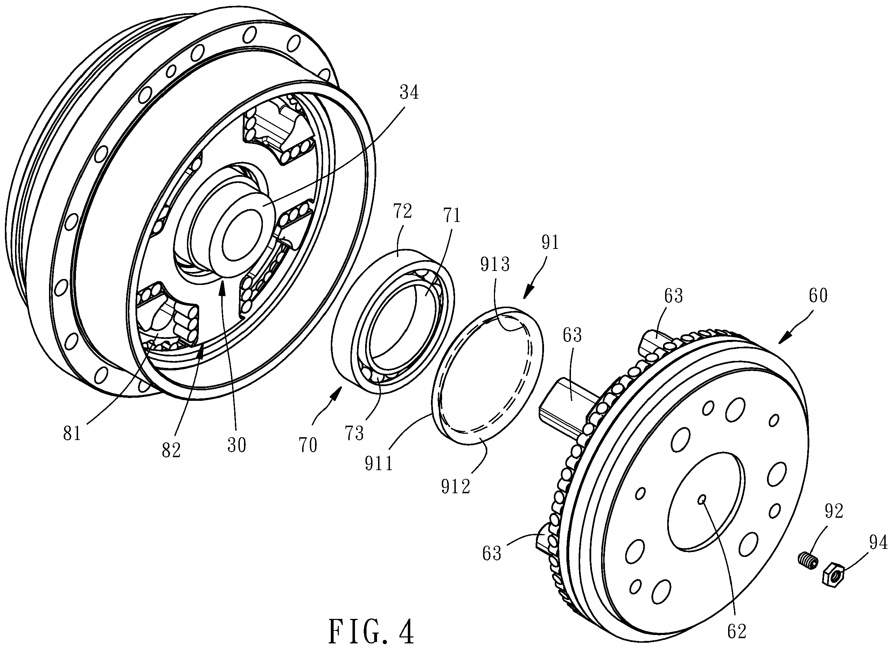

Referring to FIG. 1 to FIG. 5, the cycloidal speed reducer 10 according to the first embodiment of the present invention includes a housing 20, a rotating shaft 30, an input flange 40, a first bearing 50, an output flange 60, a second bearing 70, a speed reducing device 80, and a preload adjustment device 90.

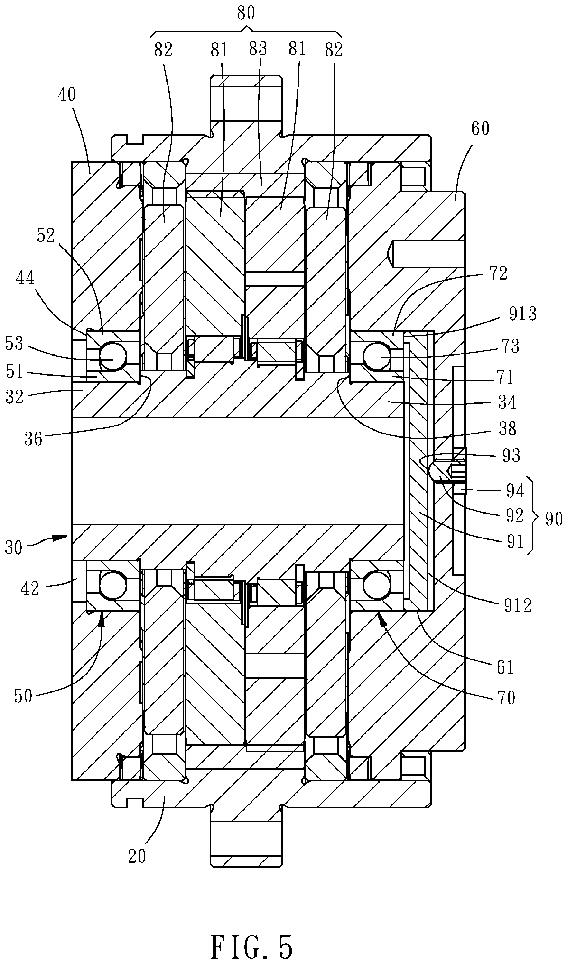

The rotating shaft 30 extends through the housing 20 and can be driven to rotate by a power source (e.g., a motor, not shown). The rotating shaft 30 has an input end 32 and an output end 34. As shown in FIG. 5, the outer peripheral surface of the input end 32 has a first shoulder portion 36, and the outer peripheral surface of the output end 34 has a second shoulder portion 38.

The input flange 40 is mounted at one end of the housing 20. The input flange 40 has an axial hole 42 at the center. The input flange 40 is mounted around the input end 32 of the rotating shaft 30 via the axial hole 42. The wall of the axial hole 42 has an inner shoulder portion 44 (see FIG. 5). The inner side of the input flange 40 has four first connecting posts 46 surrounding the axial hole 42.

The first bearing 50 (such as but not limited to the angular contact bearing illustrated herein) has a first inner ring 51, a first outer ring 52, and a plurality of first rolling balls 53 provided between the first inner ring 51 and the first outer ring 52. As shown in FIG. 5, the first inner ring 51 is mounted around the input end 32 of the rotating shaft 30 and lies against the first shoulder portion 36 of the rotating shaft 30. The first outer ring 52 lies against the inner shoulder portion 44 of the input flange 40 and has an outer peripheral surface abutting against the wall of the axial hole 42. Thus, the first bearing 50 allows the rotating shaft 30 and the input flange 40 to rotate with respect to each other.

The output flange 60 is mounted at the other end of the housing 20. The inner side of the output flange 60 has a receiving cavity 61. The output flange 60 is mounted at the output end 34 of the rotating shaft 30 via the receiving cavity 61. The inner side of the output flange 60 has four second connecting posts 63 surrounding the receiving cavity 61. The four first connecting posts 46 of the input flange 40 and the four second connecting posts 63 of the output flange 60 are connected by four bolts 12 respectively such that the input flange 40 and the output flange 60 are connected together. The output flange 60 further has an adjusting screw hole 62 at the center, wherein the adjusting screw hole 62 is in communication with the receiving cavity 61.

The second bearing 70 (such as but not limited to the angular contact bearing illustrated herein) is provided in the receiving cavity 61 and has a second inner ring 71, a second outer ring 72, and a plurality of second rolling balls 73 provided between the second inner ring 71 and the second outer ring 72. The second inner ring 71 is mounted around the output end 34 of the rotating shaft 30 and lies against the second shoulder portion 38 of the rotating shaft 30. The outer peripheral surface of the second outer ring 72 abuts against the wall of the receiving cavity 61. Thus, the second bearing 70 allows the rotating shaft 30 and the output flange 60 to rotate with respect to each other.

The speed reducing device 80 has two cycloidal discs 81, two Oldham's couplings 82, and a plurality of roller pins 83. The two cycloidal discs 81 are arranged side by side and are both mounted around a central portion of the rotating shaft 30 in an eccentric manner. The two cycloidal discs 81 are penetrated by the four second connecting posts 63 of the output flange 60. One of the Oldham's couplings 82 is provided between the input flange 40 and the cycloidal discs 81, and the other Oldham's coupling 82 is provided between the output flange 60 and the cycloidal discs 81. The roller pins 83 are provided between the inner peripheral surface of the housing 20 and the outer peripheral surfaces of the cycloidal discs 81 to enable stable operation of the cycloidal discs 81. When driven by the rotating shaft 30, the two cycloidal discs 81 begin cycloidal rotation with respect to the housing 20 and thus drive the input flange 40 and the output flange 60 through the Oldman's couplings 82 in order for the input flange 40 and the output flange 60 to produce reduced-speed rotation.

The preload adjustment device 90 in this embodiment has a preloading plate 91 and an adjusting screw 92. As shown in FIG. 5, the preloading plate 91 is provided in the receiving cavity 61 of the output flange 60 and is adjacent to the output end 34 of the rotating shaft 30. The preloading plate 91 has a first surface 911 and a second surface 912 facing away from the first surface 911, wherein the first surface 911 has an annular ridge 913. The preloading plate 91 abuts against the second outer ring 72 of the second bearing 70 via the annular ridge 913. The adjusting screw 92 is threadedly engaged in the adjusting screw hole 62 of the output flange 60 and has a pressing end 93 pressing against the second surface 912 of the preloading plate 91. When the adjusting screw 92 is rotated, the preloading plate 91 is pushed by the adjusting screw 92 against the second outer ring 72 of the second bearing 70 and thus applies a preload to the second bearing 70. The preload is transmitted sequentially through the second rolling balls 73, the second inner ring 71, the second shoulder portion 38 of the rotating shaft 30, and the first shoulder portion 36 of the rotating shaft 30 to the first bearing 50 such that the preload on the first bearing 50 is adjusted as well.

To prevent the adjusting screw 92 from rotating in reverse and thereby getting loose, the preload adjustment device 90 in this embodiment has an anti-rotation nut 94. Once preload adjustment is completed, the anti-rotation nut 94 is locked to the adjusting screw 92 until lying against the outer side of the output flange 60 to ensure that the adjusting screw 92 is secured.

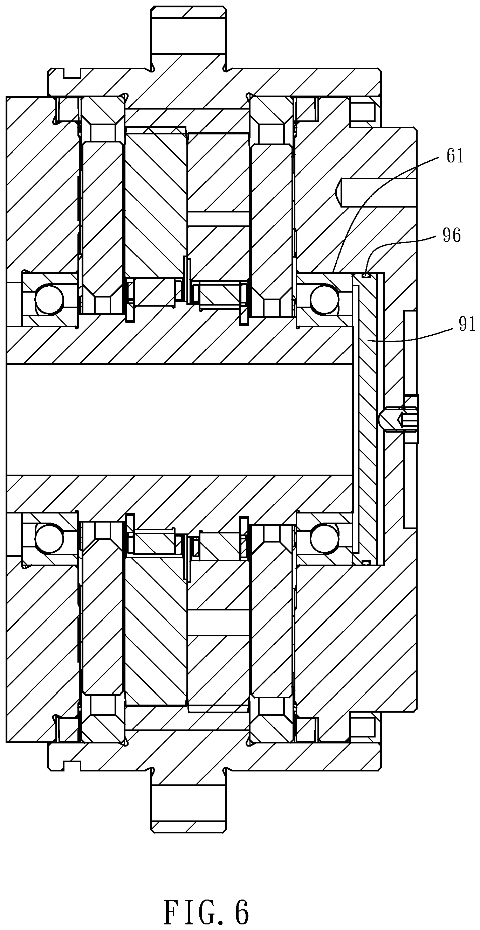

To prevent the lubricating oil in the cycloidal speed reducer 10 from leaking out, referring to FIG. 6, the outer periphery of the preloading plate 91 may be provided with a sealing element 96 abutting against the wall of the receiving cavity 61 to produce a sealing effect.

To prevent the preloading plate 91 from spinning and thus compromising the preload applied to the second bearing 70, the present invention provides a number of solutions as illustrated by the following embodiments.

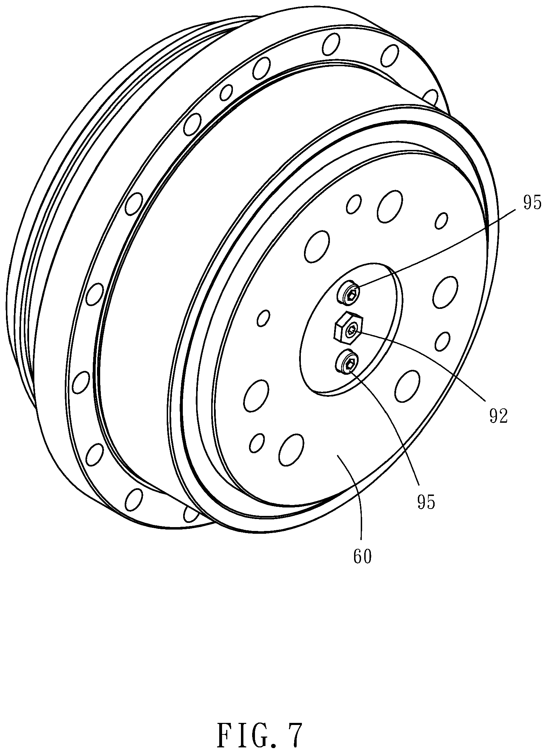

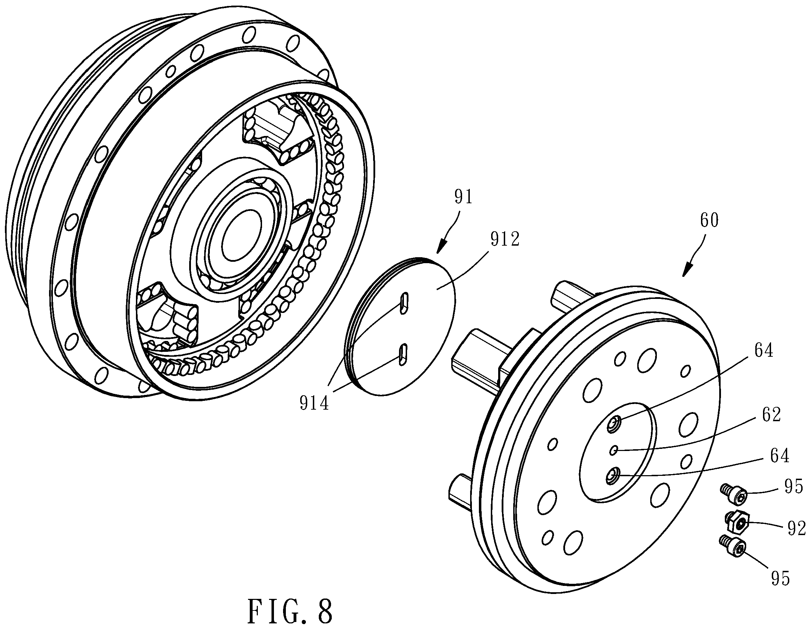

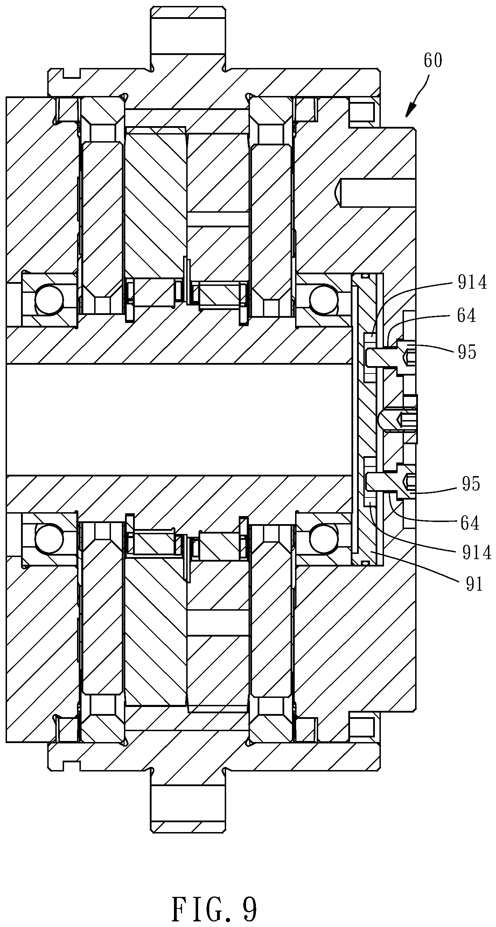

Referring to FIG. 7 to FIG. 9 for the second embodiment of the present invention, the second surface 912 of the preloading plate 91 has two slots 914. A countersunk screw hole 64 is provided above as well as below the adjusting screw hole 62 of the output flange 60. Two anti-rotation screws 95 are threadedly engaged in the two countersunk screw holes 64 respectively and each have one end extending into one of the two slots 914 to prevent the preloading plate 91 from spinning.

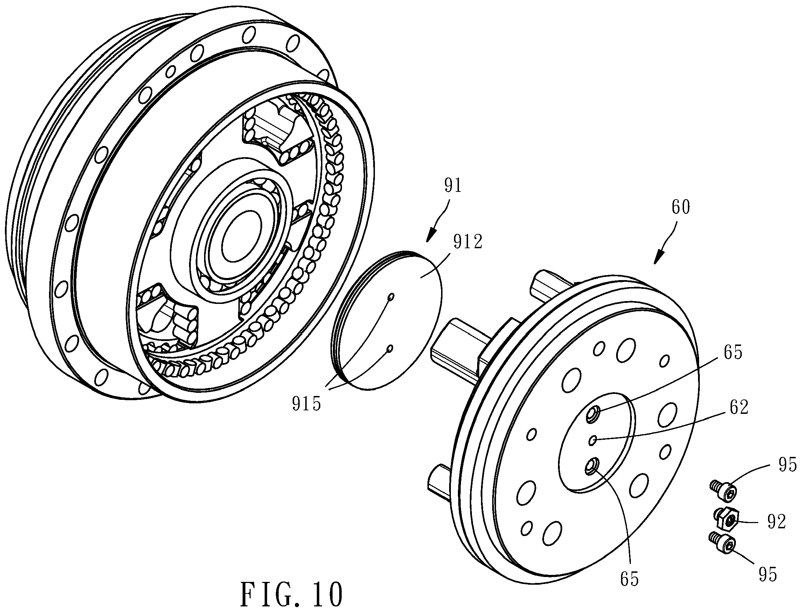

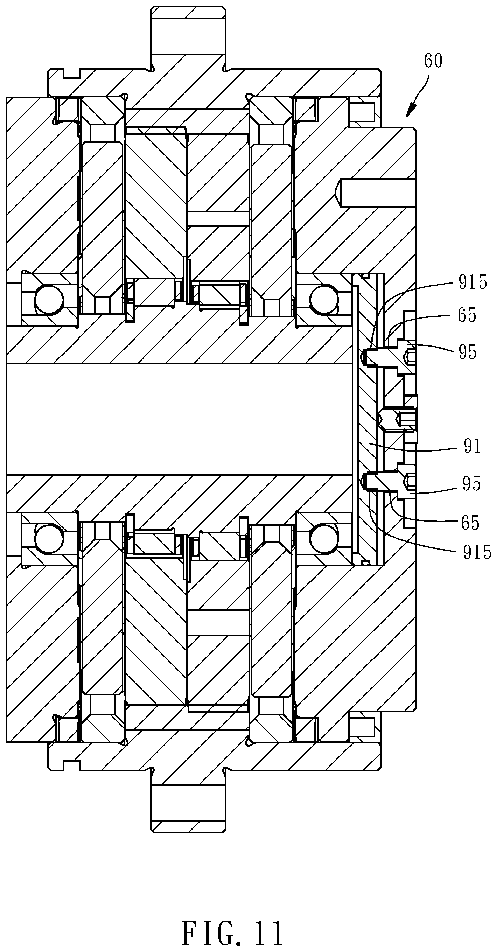

Referring to FIG. 10 and FIG. 11 for the third embodiment of the present invention, the second surface 912 of the preloading plate 91 has two anti-rotation screw holes 915. An unthreaded countersunk hole 65 is provided above as well as below the adjusting screw hole 62 of the output flange 60. Two anti-rotation screws 95 pass through the countersunk holes 65 respectively and each have one end threadedly engaged in one of the two anti-rotation screw holes 915 to prevent the preloading plate 91 from spinning.

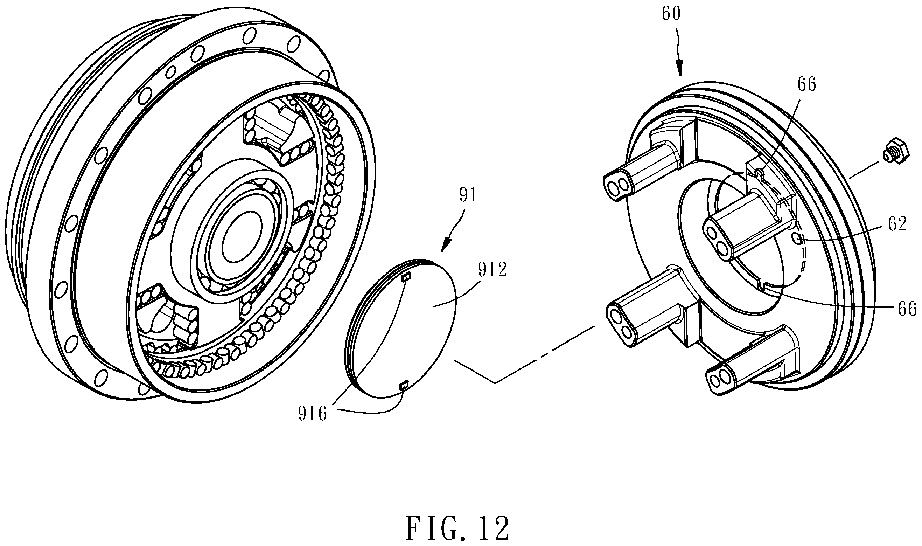

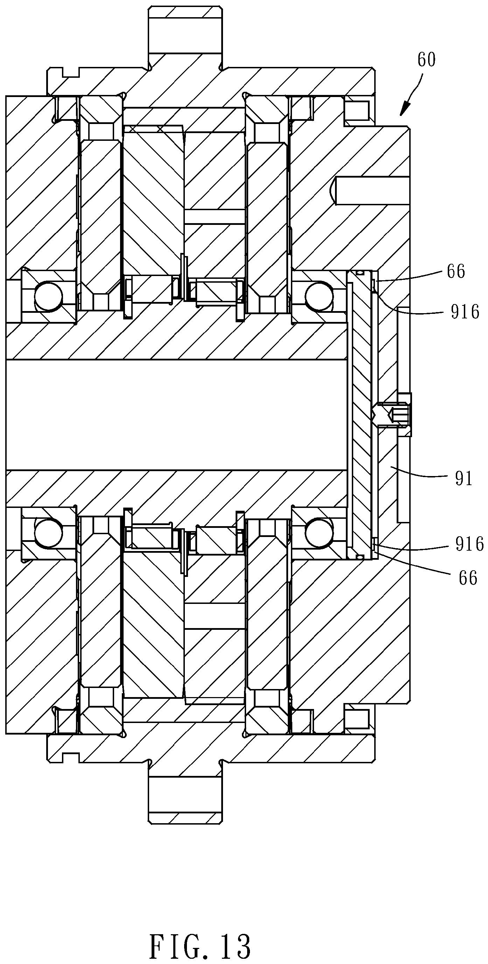

Referring to FIG. 12 and FIG. 13 for the fourth embodiment of the present invention, the second surface 912 of the preloading plate 91 has two anti-rotation protruding blocks 916. An anti-rotation groove 66 is provided above as well as below the adjusting screw hole 62 of the output flange 60. The two anti-rotation protruding blocks 916 of the preloading plate 91 are engaged in the two anti-rotation grooves 66 of the output flange 60 respectively to prevent the preloading plate 91 from spinning.

It is worth mentioning that the pressing end 93 of the adjusting screw 92 may have either a conical configuration (as shown in FIG. 5, FIG. 6, and FIG. 9) to form a point contact between the adjusting screw 92 and the preloading plate 91, or a flat configuration (as shown in FIG. 11 and FIG. 13) to form a surface contact between the adjusting screw 92 and the preloading plate 91. With either type of contact, the preloading plate 91 can apply a stable and uniform preload to the second bearing 70 when pushed by the adjusting screw 92.

According to the above, the cycloidal speed reducer 10 of the present invention is so designed that the preloading plate 91 and the adjusting screw 92 can work with each other to allow rapid and easy adjustment of the preload applied to the second bearing 70. The cycloidal speed reducer 10 not only can be manufactured and assembled with relatively great ease, but also dispenses with the washer in the prior art so that the entire structure will not have an axial increase in volume.

## Claims

1. A cycloidal speed reducer (10), comprising:
a housing (20);
a rotating shaft (30) extending through the housing (20) in a rotatable manner, wherein the rotating shaft (30) has an input end (32) and an output end (34), the input end (32) has a first shoulder portion (36), and the output end (34) has a second shoulder portion (38);
an input flange (40) provided at one end of the housing (20) and mounted around the input end (32) of the rotating shaft (30);
a first bearing (50) having a first inner ring (51) and a first outer ring (52), wherein the first inner ring (51) is mounted around the input end (32) of the rotating shaft (30) and lies against the first shoulder portion (36) of the rotating shaft (30), and the first outer ring (52) has an outer peripheral surface abutted against the input flange (40);
an output flange (60) provided at an opposite end of the housing (20) and mounted at the output end (34) of the rotating shaft (30), wherein the output flange (60) has an adjusting screw hole (62);
a second bearing (70) having a second inner ring (71) and a second outer ring (72), wherein the second inner ring (71) is mounted around the output end (34) of the rotating shaft (30) and lies against the second shoulder portion (38) of the rotating shaft (30), and the second outer ring (72) has an outer peripheral surface abutted against the output flange (60);
a speed reducing device (80) having two cycloidal discs (81) and two Oldham's couplings (82), wherein the cycloidal disc (81) is mounted eccentrically around and connected to the rotating shaft (30), and one of the Oldham's couplings (82) is provided between the cycloidal discs (81) and the input flange (40) and the other one of the Oldham's couplings is provided between the cycloidal discs (81) and the output flange (60); and
a preload adjustment device (90) having a preloading plate (91) and an adjusting screw (92), wherein the preloading plate (91) is adjacent to the output end (34) of the rotating shaft (30) and abuts against the second outer ring (72) of the second bearing (70), and the adjusting screw (92) is threadedly engaged in the adjusting screw hole (62) of the output flange (60) and has one end pressing against the preloading plate (91) such that the preloading plate (91) is pushed by the adjusting screw (92) against the second outer ring (72) of the second bearing (70) and thus applies a preload to the second bearing (70).

2. The cycloidal speed reducer (10) of claim 1, wherein the preload adjustment device (90) further has an anti-rotation nut (94), and the anti-rotation nut (94) is threadedly engaged with the adjusting screw (92) and abuts against an outer side of the output flange (60).

3. The cycloidal speed reducer (10) of claim 1, wherein the output flange (60) has an inner side having a receiving cavity (61); the output end (34) of the rotating shaft (30), the second bearing (70), and the preloading plate (91) is received in the receiving cavity (61); a sealing element (96) is provided in an outer periphery of the preloading plate (91) and abuts against a wall of the receiving cavity (61).

4. The cycloidal speed reducer (10) of claim 1, wherein the preloading plate (91) has a side facing the rotating shaft (30) and having an annular ridge (913), and the preloading plate (91) is pressed against the second outer ring (72) of the second bearing (70) via the annular ridge (913).

5. The cycloidal speed reducer (10) of claim 1, wherein the output flange (60) further has a countersunk screw hole (64), the preloading plate (91) has a side facing the output flange (60) and having a slot (914), the preload adjustment device (90) further has an anti-rotation screw (95), and the anti-rotation screw (95) is threadedly engaged in the countersunk screw hole (64) and has one end penetrating into the slot (914).

6. The cycloidal speed reducer (10) of claim 1, wherein the output flange (60) further has a countersunk hole (65), the preloading plate (91) has a side facing the output flange (60) and having an anti-rotation screw hole (915), the preload adjustment device (90) further has an anti-rotation screw (95), and the anti-rotation screw (95) passes through the countersunk hole (65) and has one end threadedly engaged in the anti-rotation screw hole (915).

7. The cycloidal speed reducer (10) of claim 1, wherein the output flange (60) further has an anti-rotation groove (66), the preloading plate (91) has an anti-rotation protruding block (916), and the anti-rotation protruding block (916) of the preloading plate (91) and the anti-rotation groove (66) of the output flange (60) are engaged with each other.

8. The cycloidal speed reducer (10) of claim 1, wherein the adjusting screw (92) has a conical pressing end (93), and the adjusting screw (92) pushes against the preloading plate (91) via the pressing end (93).

9. The cycloidal speed reducer (10) of claim 1, wherein the adjusting screw (92) has a flat pressing end (93), and the adjusting screw (92) pushes against the preloading plate (91) via the pressing end (93).

10. The cycloidal speed reducer (10) of claim 1, wherein the adjusting screw hole (62) is located at a center of the output flange (60).

## Patentansprüche

1. Zykloidales Untersetzungsgetriebe (10), welches umfasst:
ein Gehäuse (20);
eine Drehwelle (30), die sich drehbar durch das Gehäuse (20) erstreckt, worin die Drehwelle (30) ein Eingangsende (32) und ein Ausgangsende (34) hat, das Eingangsende (32) einen ersten Schulterabschnitt (36) hat und das Ausgangsende (34) einen zweiten Schulterabschnitt (38) hat;
einen Eingangsflansch (40), der an einem Ende des Gehäuses (20) vorgesehen und um das Eingangsende (32) der Drehwelle (30) herum angebracht ist;
ein erstes Lager (50) mit einem ersten Innenring (51) und einem ersten Außenring (52), worin der erste Innenring (51) um das Eingangsende (32) der Drehwelle (30) herum angebracht ist und an dem ersten Schulterabschnitt (36) der Drehwelle (30) anliegt und der erste Außenring (52) eine Außenumfangsfläche aufweist, die an dem Eingangsflansch (40) anliegt;
einen Ausgangsflansch (60), der an einem gegenüberliegenden Ende des Gehäuses (20) vorgesehen und an dem Ausgangsende (34) der Drehwelle (30) angebracht ist, worin der Ausgangsflansch (60) ein Einstellschraubenloch (62) aufweist;
ein zweites Lager (70) mit einem zweiten Innenring (71) und einem zweiten Außenring (72), worin der zweite Innenring (71) um das Ausgangsende (34) der Drehwelle (30) herum angebracht ist und an dem zweiten Schulterabschnitt (38) der Drehwelle (30) anliegt, und der zweite Außenring (72) eine äußere Umfangsfläche aufweist, die an dem Ausgangsflansch (60) anliegt;
eine Drehzahlreduziervorrichtung (80) mit zwei Zykloidscheiben (81) und zwei Oldham-Kupplungen (82), worin die Zykloidscheibe (81) exzentrisch um die Drehwelle (30) herum angebracht und mit dieser verbunden ist und eine der Oldham-Kupplungen (82) zwischen den Zykloidscheiben (81) und dem Eingangsflansch (40) und die andere der Oldham-Kupplungen zwischen den Zykloidscheiben (81) und dem Ausgangsflansch (60) vorgesehen ist; und
eine Vorspannungseinstellvorrichtung (90) mit einer Vorspannplatte (91) und einer Einstellschraube (92), worin die Vorspannplatte (91) an das Ausgangsende (34) der Drehwelle (30) angrenzt und an dem zweiten Außenring (72) des zweiten Lagers (70) anliegt, und die Einstellschraube (92) in das Einstellschraubenloch (62) des Ausgangsflansches (60) eingeschraubt ist und mit einem Ende gegen die Vorspannplatte (91) drückt, so dass die Vorspannplatte (91) von der Einstellschraube (92) gegen den zweiten Außenring (72) des zweiten Lagers (70) gedrückt wird und somit eine Vorspannung auf das zweite Lager (70) ausübt.

2. Zykloidales Untersetzungsgetriebe (10) nach Anspruch 1, worin die Vorspannungseinstellvorrichtung (90) zudem eine Verdrehsicherungsmutter (94) aufweist und die Verdrehsicherungsmutter (94) mit der Einstellschraube (92) in Gewindeeingriff steht und an einer Außenseite des Ausgangsflansches (60) anliegt.

3. Zykloidales Untersetzungsgetriebe (10) nach Anspruch 1, worin der Ausgangsflansch (60) eine Innenseite mit einem Aufnahmehohlraum (61) aufweist; das Ausgangsende (34) der Drehwelle (30), das zweite Lager (70) und die Vorspannplatte (91) in dem Aufnahmehohlraum (61) aufgenommen sind; ein Dichtungselement (96) in einem Außenumfang der Vorspannplatte (91) vorgesehen ist und an einer Wand des Aufnahmehohlraums (61) anliegt.

4. Zykloidales Untersetzungsgetriebe (10) nach Anspruch 1, worin die Vorspannplatte (91) eine der Drehwelle (30) zugewandte Seite mit einem ringförmigen Steg (913) aufweist und die Vorspannplatte (91) über den ringförmigen Steg (913) gegen den zweiten Außenring (72) des zweiten Lagers (70) gedrückt wird.

5. Zykloidales Untersetzungsgetriebe (10) nach Anspruch 1, worin der Ausgangsflansch (60) zudem ein Senkschraubenloch (64) aufweist, die Vorspannplatte (91) eine dem Ausgangsflansch (60) zugewandte Seite mit einem Schlitz (914) aufweist, die Vorspannungseinstellvorrichtung (90) zudem eine Verdrehsicherungsschraube (95) aufweist, und die Verdrehsicherungsschraube (95) in das Senkschraubenloch (64) eingeschraubt ist und mit einem Ende in den Schlitz (914) eindringt.

6. Zykloidales Untersetzungsgetriebe (10) nach Anspruch 1, worin der Ausgangsflansch (60) zudem eine Senkloch (65) aufweist, die Vorspannplatte (91) eine dem Ausgangsflansch (60) zugewandte Seite mit einem Verdrehsicherungsschraubenloch (915) aufweist, die Vorspannungseinstellvorrichtung (90) zudem eine Verdrehsicherungsschraube (95) aufweist, und die Verdrehsicherungsschraube (95) durch die Senkbohrung (65) hindurchgeht und mit einem Ende in das Verdrehsicherungsschraubenloch (915) eingeschraubt ist.

7. Zykloidales Untersetzungsgetriebe (10) nach Anspruch 1, worin der Ausgangsflansch (60) zudem eine Verdrehsicherungsnut (66) aufweist, die Vorspannplatte (91) einen vorstehenden Verdrehsicherungsblock (916) aufweist und der vorstehende Verdrehsicherungsblock (916) der Vorspannplatte (91) und die Verdrehsicherungsnut (66) des Ausgangsflansches (60) miteinander in Eingriff sind.

8. Zykloidales Untersetzungsgetriebe (10) nach Anspruch 1, worin die Einstellschraube (92) ein konisches Druckende (93) aufweist und die Einstellschraube (92) über das Druckende (93) gegen die Vorspannplatte (91) drückt.

9. Zykloidales Untersetzungsgetriebe (10) nach Anspruch 1, worin die Einstellschraube (92) ein flaches Druckende (93) aufweist und die Einstellschraube (92) über das Druckende (93) gegen die Vorspannplatte (91) drückt.

10. Zykloidales Untersetzungsgetriebe (10) nach Anspruch 1, worin sich das Loch (62) für die Einstellschraube in der Mitte des Ausgangsflansches (60) befindet.

## Revendications

1. Réducteur de vitesse cycloïdal (10), comprenant:
un boîtier (20);
un arbre rotatif (30) traversant le boîtier (20) de manière rotative, l'arbre rotatif (30) ayant une extrémité d'entrée (32) et une extrémité de sortie (34), l'extrémité d'entrée (32) ayant un premier épaulement (36) et l'extrémité de sortie (34) ayant un second épaulement (38);
une bride d'entrée (40) située à une extrémité du boîtier (20) et montée autour de l'extrémité d'entrée (32) de l'arbre rotatif (30);
un premier palier (50) comportant une première bague intérieure (51) et une première bague extérieure (52), dans lequel la première bague intérieure (51) est montée autour de l'extrémité d'entrée (32) de l'arbre rotatif (30) et repose contre la première partie d'épaulement (36) de l'arbre rotatif (30), et la première bague extérieure (52) a une surface périphérique extérieure en butée contre la bride d'entrée (40);
une bride de sortie (60) située à une extrémité opposée du boîtier (20) et montée à l'extrémité de sortie (34) de l'arbre rotatif (30), la bride de sortie (60) comportant un trou de vis de réglage (62);
un second palier (70) comportant une seconde bague intérieure (71) et une seconde bague extérieure (72), dans lequel la seconde bague intérieure (71) est montée autour de l'extrémité de sortie (34) de l'arbre rotatif (30) et repose contre la seconde partie d'épaulement (38) de l'arbre rotatif (30), et la seconde bague extérieure (72) a une surface périphérique extérieure en butée contre la bride de sortie (60);
un dispositif de réduction de la vitesse (80) comportant deux disques cycloïdaux (81) et deux accouplements d'Oldham (82), dans lequel le disque cycloïdal (81) est monté excentriquement autour de l'arbre rotatif (30) et relié à celui-ci, et l'un des accouplements d'Oldham (82) est prévu entre les disques cycloïdaux (81) et la bride d'entrée (40) et l'autre des accouplements d'Oldham est prévu entre les disques cycloïdaux (81) et la bride de sortie (60); et
un dispositif de réglage de la précharge (90) comportant une plaque de précharge (91) et une vis de réglage (92), dans lequel la plaque de précharge (91) est adjacente à l'extrémité de sortie (34) de l'arbre rotatif (30) et vient en butée contre la deuxième bague extérieure (72) du deuxième palier (70), et la vis de réglage (92) est engagée par filetage dans le trou de vis de réglage (62) de la bride de sortie (60) et a une extrémité qui appuie sur la plaque de précharge (91) de sorte que la plaque de précharge (91) est poussée par la vis de réglage (92) contre la deuxième bague extérieure (72) du deuxième palier (70) et applique ainsi une précharge au deuxième palier (70).

2. Réducteur de vitesse cycloïdal (10) de la revendication 1, dans lequel le dispositif de réglage de la précharge (90) comporte en outre un écrou anti-rotation (94), et l'écrou anti-rotation (94) est engagé par filetage avec la vis de réglage (92) et vient en butée contre un côté extérieur de la bride de sortie (60).

3. Réducteur de vitesse cycloïdal (10) de la revendication 1, dans lequel la bride de sortie (60) a un côté intérieur comportant une cavité de réception (61); l'extrémité de sortie (34) de l'arbre rotatif (30), le second palier (70) et la plaque de précharge (91) sont reçus dans la cavité de réception (61); un élément d'étanchéité (96) est prévu dans une périphérie extérieure de la plaque de précharge (91) et vient en butée contre une paroi de la cavité de réception (61).

4. Réducteur de vitesse cycloïdal (10) de la revendication 1, dans lequel la plaque de précharge (91) a un côté tourné vers l'arbre rotatif (30) et a une arête annulaire (913), et la plaque de précharge (91) est pressée contre la deuxième bague extérieure (72) du deuxième palier (70) par l'intermédiaire de l'arête annulaire (913).

5. Réducteur de vitesse cycloïdal (10) de la revendication 1, dans lequel la bride de sortie (60) comporte en outre un trou de vis à tête fraisée (64), la plaque de précharge (91) a un côté tourné vers la bride de sortie (60) et comporte une fente (914), le dispositif de réglage de la précharge (90) comporte en outre une vis anti-rotation (95), et la vis anti-rotation (95) est engagée par filetage dans le trou de vis à tête fraisée (64) et a une extrémité pénétrant dans la fente (914).

6. Réducteur de vitesse cycloïdal (10) de la revendication 1, dans lequel la bride de sortie (60) comporte en outre un trou fraisé (65), la plaque de précharge (91) a un côté tourné vers la bride de sortie (60) et comporte un trou de vis anti-rotation (915), le dispositif de réglage de la précharge (90) comporte en outre une vis anti-rotation (95), et la vis anti-rotation (95) traverse le trou fraisé (65) et a une extrémité engagée de manière filetée dans le trou de vis anti-rotation (915).

7. Réducteur de vitesse cycloïdal (10) de la revendication 1, dans lequel la bride de sortie (60) comporte en outre une rainure anti-rotation (66), la plaque de préchargement (91) comporte un bloc en saillie anti-rotation (916), et le bloc en saillie anti-rotation (916) de la plaque de préchargement (91) et la rainure anti-rotation (66) de la bride de sortie (60) sont engagées l'un avec l'autre.

8. Réducteur de vitesse cycloïdal (10) de la revendication 1, dans lequel la vis de réglage (92) a une extrémité de pression conique (93), et la vis de réglage (92) pousse contre la plaque de préchargement (91) par l'intermédiaire de l'extrémité de pression (93).

9. Réducteur de vitesse cycloïdal (10) de la revendication 1, dans lequel la vis de réglage (92) a une extrémité de pression plate (93), et la vis de réglage (92) pousse contre la plaque de précharge (91) par l'intermédiaire de l'extrémité de pression (93).

10. Réducteur de vitesse cycloïdal (10) de la revendication 1, dans lequel le trou de vis de réglage (62) est situé au centre de la bride de sortie (60).
